# EUROPÄISCHE PATENTSCHRIFT

(11) **EP 0 496 952 B1**
(45) Veröffentlichungstag und Bekanntmachung des Hinweises auf die Patenterteilung: **17.08.1994**
(21) Anmeldenummer: 91118104.8
(22) Anmeldetag: 24.10.1991
(51) Int. Cl.: G01G 21/28

(54) **Windschutz für eine Präzisionswaage**
Wind protection for a precision balance
Protection contre le vent pour une balance de précision

(30) Priorität: 01.02.1991 CH 322/91
(43) Veröffentlichungstag der Anmeldung: 05.08.1992
(73) Patentinhaber: Mettler-Toledo AG, 8606 Greifensee (CH)
(72) Erfinder: Kunz, Peter, CH-8625 Gossau (CH); Wojnarski, Tadeusz, CH-8304 Wallisellen (CH)

(56) Entgegenhaltungen:
- EP-A- 0 234 008
- DE-C- 3 508 873
- DE-U- 7 736 324
- US-A- 1 784 098

## Beschreibung

Die Erfindung begrifft einen Windschutz für eine Präzisionswaage, umfassend einen Sockel, eine feststehende, mit dem Sockel verbundene Rückwand, eine Frontscheibe, die oben durch zwei Streben mit der Rückwand verbunden ist, und zwei Seitenwände bildende Schiebetüren, welche in Längsführungen an den Streben und am Sockel verschiebbar gehalten sind.

Windschutzvorrichtungen der genannten Gattung sind bekannt. Sie dienen dazu, Verfälschungen des Wägeresultates infolge Luftströmungen zu verhindern.
Aus der EP-B1-0 234 008 ist eine Präzisionswaage mit einem die Waagschale allseits umschliessenden Wägeraum bestehend aus einem feststehenden Frontglas und je einer seitlich nach hinten verschiebbaren Schiebetür bekannt. Bei dieser bekannten Waage ist hinter dem Wägeraum, d.h. hinter der den Wägeraum begrenzenden Rückwand, die Wägemechanik und -elektronik in einem Gehäuse untergebracht, das die Schiebetür in zurückgeschobener Position vollständig aufnehmen und führen kann. Die die Schiebetür tragenden Schienen im Sockel der Waage und an der Oberseite erstrecken sich vom Frontglas bis zur rückwärtigen Wand des Waagengehäuses und ermöglichen eine präzise Führung der Tür entlang dem gesamten Verschiebeweg. Der elektrische Antrieb für die Verschiebung greift an einer unterhalb dem Waagenboden angeordneten, mit den Türen nach hinten verschiebbaren Platte an. Dies gewährleistet eine störungsfreie Funktionsweise.

Ist der Wägeraum, d.h. die seitlichen Schiebetüren, die Rückwand, die Frontseite und der obere Abschluss, auf einer oberschaligen Waage aufgesetzt, deren Wägemechanik vollständig im Sockel der Waage untergebracht ist, so fehlt für die Schiebetüren der Führungsbereich hinter der Rückwand des Wägeraumes. Ein Beispiel einer solchen Waage ist aus der deutschen Patentschrift 35 08 873 bekannt. Beim Zurückschieben der seitlichen Schiebetüren verlassen deren Unterkanten und Oberkanten die am Windschutz angebrachten Führungen und gelangen völlig ungeführt fliegend in den Freiraum hinter der Waage. Der noch in den Führungen verbleibende Rest der Schiebetüren ist so kurz, dass einerseits das Gewicht der Türe und anderseits die allenfalls nicht in der Mitte der Türe eingeleitete Kraft für die Verschiebung bewirken, dass sich die Tür nach hinten neigt und dadurch in den Führungen verkantet. Um eine grössere Führungslänge zu erreichen, kann beispielsweise, wie in der Patentschrift 35 08 873 gezeigt ist, eine die Rückwand der Waage überragende Führungsschiene vorgesehen werden. Eine solche Ausführung ist nicht nur optisch, sondern auch praktisch unbefriedigend und schafft nur teilweise Abhilfe.

Aus der US-Patentschrift 1,784,098 ist weiter ein Windschutz für eine Präzisionswaage bekannt, bei der das Frontglas ohne seitliche Führungen nach oben über die obere Abdeckung des Wägeraumes hinaus verschiebbar ist. Dazu ist das Frontglas in einem sehr steifen, mit den Seitenwänden verbundenen Rahmen längsgeführt und wird in der jeweiligen Anhebestellung durch ein Gegengewicht gehalten, das mittels zwei über Rollen umlaufenden, an der Unterkante des Frontglases angreifenden Bändern mit der Frontscheibe verbunden ist. Wenn bei einer solchen Waage das Frontglas nicht exakt in der Mitte am Griff gehalten und nach oben verschoben wird, kann es sich bei zunehmender Anhebehöhe in den seitlichen Führungen verkanten.

Die Aufgabe der vorliegenden Erfindung besteht darin, einen Windschutz zu schaffen, bei dem die Schiebetüren in allen Stellungen exakt geführt und beim Zurückschieben über die Rückseite des Windschutzes hinaus verkantungsfrei gehalten werden.
Gelöst wird diese Aufgabe durch einen Windschutz der eingangs genannten Art, der sich dadurch auszeichnet, dass im Bereich der Oberkante und im Bereich der Unterkante der Schiebetür Kupplungsmittel angebracht und mit Transmissionsmitteln bewegungsmässig miteinander verbunden sind. Dabei können beispielsweise Zahntriebe oder Seil-bzw. Riementriebe oder Kombinationen von beiden zur Anwendung kommen.
An der Oberkante und an der Unterkante der Schiebetüren befestigte Zahnstangen, an denen drehfest miteinander verbundene Zahnritzel kämmen, gewährleisten eine exakt gleichlaufende Bewegung der Türen an der Ober- und Unterseite, so dass zu keinem Zeitpunkt eine Verkantung in den Führungsschienen eintreten kann. Die Verwendung von zwei auf einer gemeinsamen Welle angeordneten Zahnritzeln erlaubt eine kostengünstige Herstellung und benötigt sehr wenig Raum. Die die Zahnritzel verbindende Welle kann auf einfache Weise im Sockel und der oberen Abdeckung des Wägeraumes oder an dessen Rückwand gelagert werden. Die Zahnstangen können direkt auf die Schiebetüren, welche meist aus Glas gefertigt sind, aufgeklebt werden; sie können aber auch, falls die Schiebetüren oben und unten ein Rahmenprofil aufweisen, Teil dieses Rahmenprofiles sein. Durch eine elastische Vorspannung der Zahnritzel legen sich diese spielfrei an den Zahnstangen an. Die Vorspannung für die Zahnritzel kann in einfacher Weise dadurch erreicht werden, dass die die Zahnritzel tragende Welle vor dem Einschieben der Schiebetüren in die Führungen durchgebogen gehalten wird. Nach dem Einführen der Tür in die Ausgangslage kehrt die elastische Welle von selbst in die gestreckte Form zurück.

Wenn die Zahnstangen derart angeordnet werden, dass deren Zähne einander zugewendet sind, können die beiden in den Zahnstangen kämmenden Ritzel in einfacher und kostengünstiger Weise durch einen gekreuzten Seil- oder Riementrieb kraftschlüssig miteinander verbunden werden.
Bei der Verwendung eines elektrischen Antriebes für die Türen kann dieser in vorteilhafter Weise direkt mit den Transmissionsmitteln, d.h. der Welle oder dem Riementrieb, verbunden werden. Dadurch wird gewährleistet, dass der Vortrieb synchron an der Ober- und an der Unterkante der Schiebetür erfolgt.
Die körperliche Verbindung zwischen dem Windschutzgehäuse und den Schiebetüren ermöglicht bei Verwendung von leitenden Materialien einen einwandfreien elektrischen Kontakt der beiden Teile und damit eine Ableitung allfällig auftretender elektrostatischer Aufladung der Türen, welche zu einer Beeinflussung des Wägeresultates führen kann.

Anhand illustrierter Ausführungsbeispiele wird die Erfindung näher erläutert. Es zeigen:
- Figur 1: eine perspektische Darstellung einer Präzisionswaage mit einem aufgesetzten Windschutz,
- Figur 2: eine Seitenansicht der Waage mit einer zurückgeschobenen Tür,
- Figur 3: einen Querschnitt längs Linie III-III in Figur 2,
- Figur 4: einen Horizontalschnitt längs Linie IV-IV in Figur 2,
- Figur 5: eine Detailansicht des Bereiches A in Figur 3,
- Figur 6: eine Detailansicht des Bereiches A in einer weiteren Ausführungsform,
- Figur 7: eine schematische Darstellung der Transmission mit einem Seiltrieb und
- Figur 8: eine schematische Darstellung der Transmission in einer weiteren Ausführungsform der Erfindung.

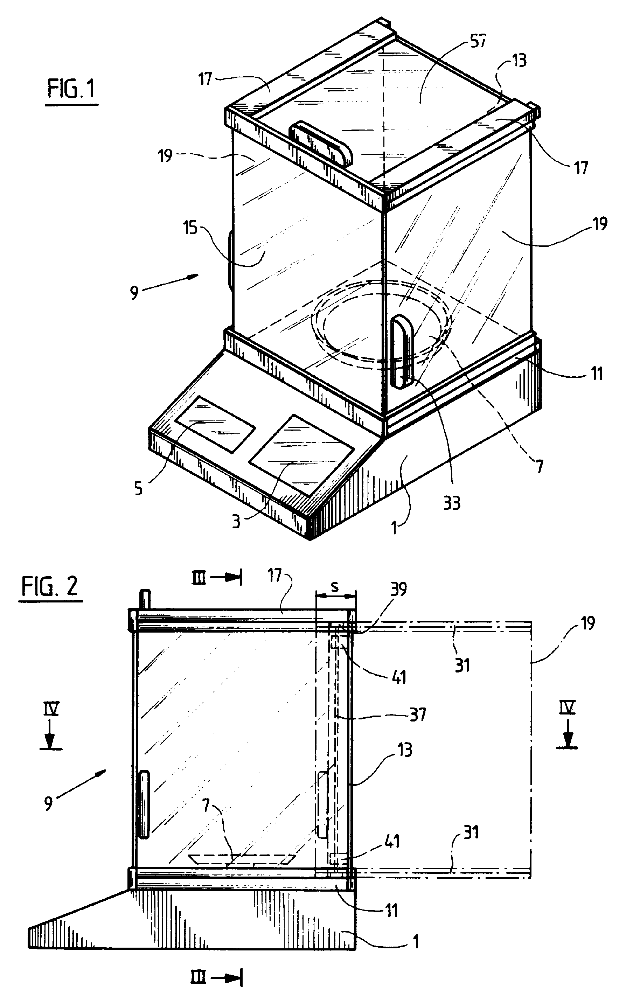

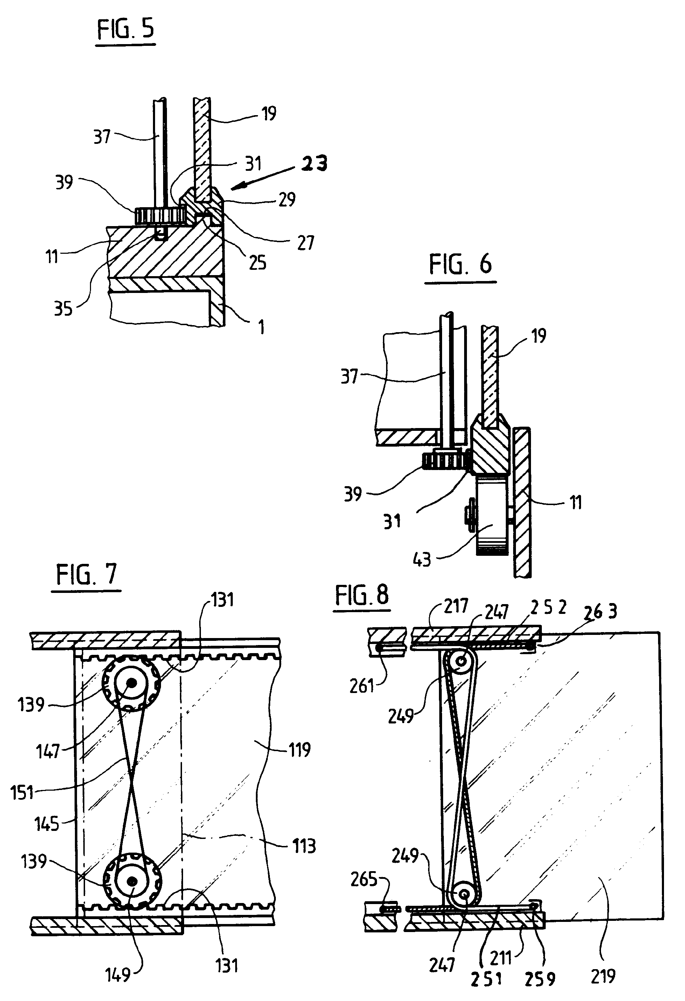

Auf einem mit Bezugszeichen 1 bezeichneten Waagengehäuse mit einem Anzeigefeld 3 und einem Tastaturfeld 5 und einer Waagschale 7 ist ein kubischer Windschutz 9 aufgesetzt. Der Windschutz 9 besteht im wesentlichen aus einem Sockel 11, einer mit dem Sockel fest verbundenen Rückwand 13, einem Frontglas 15, das den Sockel 11 mit zwei von der Rückwand 13 nach vorne verlaufenden Streben 17 verbindet, sowie zwei den Windschutz schutz 9 seitlich verschliessenden Schiebetüren 19.
In der Seitenansicht nach Figur 2 ist die in gebrochenen Linien dargestellte Schiebetür 19 vollständig zur Seite gerückt, d.h. nach hinten geschoben. Sie ragt nahezu vollständig über die Rückwand 13 hinaus, und zwar fliegend, d.h. ohne Führungselemente. Einzig die beiden kurzen Abschnitte im Bereich s sind noch gehalten von der oberen Führungsbahn 21 in der Strebe 17 und der unteren Führungsbahn 23 im Sockel 11. Die Führungsbahnen 21 und 23 an den Streben 17 bzw. am Sockel 11 umfassen eine überstehende Rippe 25, welche in eine Nut 27 an den seitlichen Schiebetüren 19 eingreift. Die Nuten 27 können direkt an der aus Glas bestehenden Schiebetür 19 angebracht sein; sie sind aus fabrikationstechnischen Gründen aber vorzugsweise in einem Rahmenprofil 29 eingelassen, welches die Schiebetür 19 oben und unten abschliesst (vgl. Figur 5).
Auf der dem Wägeraum zugewendeten Seite der Rahmenprofile 29 ist je eine Zahnstange 31 angeordnet. Die Zahnstange 31 kann auf das Rahmenprofil 29 aufgeklebt oder aufgeschraubt sein; sie kann aber auch Teil des Rahmenprofiles 29 sein, insbesondere wenn dieses aus Kunststoff besteht. Die Zähne oder Verzahnungen der Zahnstange 31 sind gegen das Innere des Wägeraums im Windschutz 9 gerichtet. Die Rippen 25 am Sockel 11 und in den Streben 17 erstrecken sich im wesentlichen über die gesamte Länge des Windschutzes 9 und enden an dessen Rückwand 13. Ein Griff 33 an jeder Schiebetür 19 erleichtert das Oeffnen.

Im Sockel 11 und in der Strebe 17 oder an der Oberkante der Rückwand 13 ist je eine Bohrung 35 angebracht, die die Enden einer Welle 37, welche sich über die gesamte Höhe des Windschutzes erstreckt, aufnehmen. Auf der Welle 37 sitzen zwei Zahnritzel 39 und kämmen mit den Zahnstangen 31 an der Schiebetür 19. Anstelle einer Lagerung der Welle 37 an deren Enden können auch Lagerböcke 41 an der Rückwand 13 vorgesehen sein. Die Zahnritzel 39 sind drehfest mit der Welle 37 verbunden (vgl. Figur 2).

Anstelle mittels der am Sockel angebrachten Rippe 25 kann in der Ausgestaltung der Erfindung gemäss Figur 6 das untere Rahmenprofil 29 auf Rollen 43 am Sockel 11 aufliegend geführt sein.

In der Ausgestaltung der Erfindung nach Figur 7 sind die beiden Zahnstangen 131an der Schiebetür 119 derart angeordnet, dass die Verzahnungen einander zugekehrt sind. Die Zahnritzel 139 sind an parallel zu den Schiebetüren 119 verlaufenden Abschnitten 145 der Rückwand 113 auf Wellenstummeln 147 frei drehbar gelagert. Drehfest mit den Zahnritzeln 139 ist je eine Riemenscheibe 149 verbunden. Ueber die beiden Riemenscheiben 149 ist ein Flach- oder Zahnriemen 151 gekreuzt umgelegt und verbindet die beiden Zahnritzel 139 synchron miteinander.

In der Ausführungsform der Erfindung gemäss Figur 8 sind jeder Schiebetür 219 zwei Seile oder Riemen 251 und 252 zugeordnet. Beide Seile sind mit ihren Enden an Befestigungsstellen 259, 261 bzw. 263, 265 mit der Strebe 217 und dem Sockel 211 verbunden. An den Schiebetüren 219 sind auf Wellenstummeln 247 je zwei frei drehbare Rollen oder Riemenscheiben 249 aufgesetzt.
Das Seil 251 verläuft von seiner Befestigungsstelle 259 am Sockel 211 über die unten liegende Rolle 249 zur oben angeordneten Rolle und wird an dieser in Richtung auf die Vorderseite des Windschutzes hin umgelenkt und ist dort an der Befestigungsstelle 261 am vorderen Ende der Strebe 217 befestigt. Analog dazu verläuft das Seil 252 von der Hinterkante der Strebe 217 (Befestigungsstelle 263) über die obere Rolle 249 zur unteren Rolle und wird an dieser nach vorne umgelenkt und ist mit dem Ende an der Befestigungsstelle 265 am Sockel 211 befestigt.

Durch die gegengleiche Anordnung der beiden Seile 251 und 252 wird die Ober- und die Unterkante der Schiebetür 219 zwangsläufig immer parallel geführt und kann sich in den Führungen nicht schräg stellen.

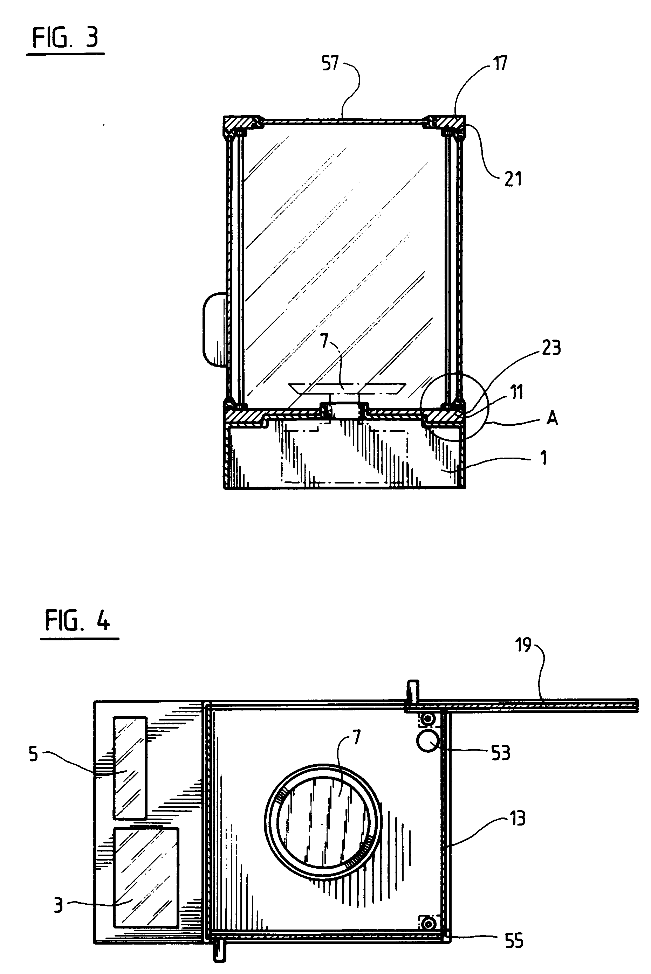

Ist für das Verschieben der Schiebetüren 19,119 ein Elektroantrieb erwünscht, so kann ein Antriebsmotor 53 bzw. ein auf der Abtriebswelle des Motors aufgesetztes Zahnritzel direkt mit einem der vorhandenen Zahnritzel 39,139 kämmend verbunden werden (vgl. dazu schematische Darstellung des Antriebes in Figur 4).

Die körperliche Verbindung zwischen den Schiebetüren 19 mit dem Sockel 11 bzw. dem Waagengehäuse 9 über die miteinander kämmenden Zahnstangen 31 und Zahnritzel 39 kann auch dazu benutzt werden, elektrostatische Ladungen von den Schiebetüren 19,119 abzuleiten. Zu diesem Zweck können die Zahnstangen 31,131 und die Zahnritzel 39,139 aus einem elektrisch leitenden Material hergestellt werden. Alternativ oder zusätzlich kann auch eine an der Rückwand 13,113 angebrachte Bürstendichtung 55 (vgl. Figur 4) aus elektrisch leitendem Material bestehen.

Selbstverständlich kann auch eine horizontal liegende Schiebetür 57, welche den oberen Abschluss des Windschutzes 9 bildet und an der Strebe 17 gehalten ist, in der beschriebenen Weise geführt werden.

## Patentansprüche

1. Windschutz für eine Präzisionswaage, umfassend einen Sockel (11), eine feststehende, mit dem Sockel verbundene Rückwand (13), eine Frontscheibe (15), die oben durch Streben (17) oder Rahmen mit der Rückwand verbunden ist, und zwei Seitenwände bildende Schiebetüren (19;119;219), welche in Langsführungen (21,23) an den Streben und am Sockel verschiebbar gehalten sind, dadurch gekennzeichnet, dass im Bereich der Oberkante und im Bereich der Unterkante wenigstens einer Schiebetür (19;119;219) Kupplungsmittel (31;131;247) angebracht und mit Transmissionsmitteln (37,39;139,151;251,252) bewegungsmässig miteinander verbunden sind.

2. Windschutz nach Anspruch 1, dadurch gekennzeichnet, dass die Kupplungsmittel (31,131) als Zahnstangen ausgebildet sind und die Transmissionmittel zwei mit den Kupplungsmitteln (31,131) kämmende Zahnritzel (39,139) umfassen, welche Zahnritzel (39,139) antriebsmässig miteinander verbunden sind.

3. Windschutz nach Anspruch 2, dadurch gekennzeichnet, dass die Zahnstangen (31) mit der der Verzahnung abgewendeten Seite auf der Innenfläche der Schiebetüren (19) befestigt sind, und dass die Zahnritzel (39) auf einer gemeinsamen Welle (37) aufgesetzt sind, welche unten im Sockel (11) und oben in der Strebe (17) drehbar gelagert ist.

4. Windschutz nach Anspruch 2, dadurch gekennzeichnet, dass die Zahnstangen (31) mit der der Verzahnung abgewendeten Seite auf der Innenfläche der Schiebetüren (19) befestigt sind, und dass die Zahnritzel (39) auf einer gemeinsamen Welle (37) aufgesetzt sind, welche in an der Rückwand (13) angebrachten Lagerböcken (41) drehbar gelagert ist.

5. Windschutz nach einem der Ansprüche 3 oder 4, dadurch gekennzeichnet, dass die Zahnstangen (31) an den die Schiebetür (19) oben und unten abschliessenden Rahmenprofilen (29) befestigt sind, oder dass die Rahmenprofile (29) selbst eine gezahnte Oberfläche aufweisen.

6. Windschutz nach einem der Ansprüche 2 bis 5, dadurch gekennzeichnet, dass die Zahnritzel (39) durch Federspannung spielfrei an die Zahnstangen (31) andrückbar geführt sind.

7. Windschutz nach Anspruch 6, dadurch gekennzeichnet, dass die Federspannung durch eine durch Biegung der Welle (37) in Richtung der Schiebetür (19) erzeugte Vorspannung aufrechthaltbar ist.

8. Windschutz nach Anspruch 2, dadurch gekennzeichnet, dass die Zahnstangen (131) an der Ober- und an der Unterkante der Tür (119) befestigt sind deart, dass die Verzahnungen der beiden Zahnstangen (131) gegeneinander gerichtet sind, und dass die Zahnritzel (139) um senkrecht zur Verschiebeebene der Schiebetür (119) liegende Achsen (147) drehbar gelagert und durch einen Seil- oder Riementrieb (149,151) kraftschlüssig miteinander verbunden sind.

9. Windschutz nach Anspruch 1, dadurch gekennzeichnet, dass im Bereich einer Strebe (217) der Schiebetür (219) die Enden zweier flexibler Zugelemente (251,252) befestigtsind, die kreuzweise über eine erste Rolle (249) an der Oberkante der Schiebetür (219) zu einer zweiten Rolle (249) an der Unterkante der Schiebetür und von dort zum Sockel (211) geführt und dort befestigt sind.

10. Windschutz nach einem der Ansprüche 1 bis 9, dadurch gekennzeichnet, dass die Transmissionsmittel (37,137,51,151,251,252) mit einem elektrischen Antrieb (53) verbunden sind.

11. Windschutz nach einem der Ansprüche 1 bis 10, dadurch gekennzeichnet, dass zwischen der Rückwand (13,113,213) und den Schiebetüren (19,119,219) elastische Dichtungen (55) aus elektrisch leitendem Material angeordnet sind, und/oder dass die Zahnstangen (31,131) und Zahnritzel (39,139) aus elektrisch leitendem Material hergestellt sind.

## Claims

1. Draught protection for a precision balance comprising a base (11), a fixed rear wall (13) connected to the base, a front pane (15) which at the top is connected to the rear wall by struts (17) or frames, and two sliding doors (19; 119; 219) which form side walls and which are held displaceably in longitudinal guides (21, 23) on the struts and on the base, characterised in that coupling means (31; 131; 247) are provided in the region of the upper edge and in the region of the lower edge of at least one sliding door (19; 119; 219) and are connected together in respect of movement by transmission means (37, 39; 139, 151; 251, 252).

2. Draught protection according to claim 1 characterised in that the coupling means (31, 131) are in the form of toothed racks and the transmission means include two pinions (39, 139) meshing with the coupling means (31, 131), which pinions (39, 139) are drivingly interconnected.

3. Draught protection according to claim 2 characterised in that the toothed racks (31) are fixed with the side remote from the tooth arrangement on the inside surface of the sliding doors (19) and that the pinions (39) are fitted on a common shaft (37) which is rotatably mounted at the bottom in the base (11) and at the top in the strut (17).

4. Draught protection according to claim 2 characterised in that the racks (31) are fixed with the side remote from the tooth arrangement on the inside surface of the sliding doors (19) and that the pinions (39) are fitted on a common shaft (37) which is rotatably mounted in support bearing members (41) mounted on the rear wall (13).

5. Draught protection according to one of claims 3 and 4 characterised in that the toothed racks (31) are fixed to the shaped frame members (29) which terminate the sliding door (19) at the top and bottom thereof, or that the shaped frame members (29) themselves have a toothed surface.

6. Draught protection according to one of claims 2 to 5 characterised in that the pinions (39) are guided in such a way that they can be pressed against the toothed racks (31) without play by spring stressing.

7. Draught protection according to claim 6 characterised in that the spring stressing can be maintained by a biasing effect produced by bending the shaft (37) in the direction of the sliding door (19).

8. Draught protection according to claim 2 characterised in that the toothed racks (131) are fixed to the upper and lower edges of the door (119) in such a way that the tooth arrangements of the two toothed racks (131) are directed in opposite relationship and that the pinions (139) are mounted rotatably about axes (147) disposed perpendicularly to the plane of displacement of the sliding door (119) and are force-lockingly connected together by a cable or belt drive (149, 151).

9. Draught protection according to claim 1 characterised in that the ends of two flexible pulling elements (251, 252) are fixed in the region of a strut (217) of the sliding door (219), which pulling elements are passed cross-wise over a first roller (249) at the upper edge of the sliding door (219) to a second roller (249) at the lower edge of the sliding door and from there to the base (211) where they are secured.

10. Draught protection according to one of claims 1 to 9 characterised in that the transmission means (37, 137, 51, 151, 251, 252) are connected to an electrical drive (53).

11. Draught protection according to one of claims 1 to 10 characterised in that elastic seals (55) of electrically conductive material are arranged between the rear wall (13, 113, 213) and the sliding doors (19, 119, 219) and/or that the toothed racks (31, 131) and pinions (39, 139) are made from electrically conductive material.

## Revendications

1. Paravent pour une balance de précision, comprenant un socle (11), une paroi arrière fixe (13) reliée au socle, une vitre avant (15) qui, dans sa partie supérieure, est reliée à la paroi arrière par des entretoises (17) ou des châssis, et deux portes coulissantes (19 ; 119 ; 219) qui forment des parois latérales et qui sont maintenues de manière coulissante dans des guidages longitudinaux (21, 23) disposés sur les entretoises et sur le socle, caractérisé en ce que des moyens d'accouplement (31 ; 131 ; 247) sont disposés dans la zone du bord supérieur et dans la zone du bord inférieur d'au moins une porte coulissante (19 ; 119 ; 219) et sont reliés entre eux en formant une liaison de déplacement avec des moyens de transmission (37, 39 ; 139, 151 ; 251, 252).

2. Paravent selon la revendication 1, caractérisé en ce que les moyens d'accouplement (31, 131) sont conçus sous la forme de crémaillères et les moyens de transmission comprennent deux pignons (39, 139) qui s'engrènent dans les moyens d'accouplement (31, 131), lesdits pignons (39, 139) formant entre eux une liaison d'entraînement.

3. Paravent selon la revendication 2, caractérisé en ce que le côté des crémaillères (31) opposé à la denture est fixé sur la surface intérieure des portes coulissantes (19), et en ce que les pignons (39) sont disposés sur un arbre commun (37) qui est monté en rotation, en bas, dans le socle (11) et, en haut, dans l'entretoise (17).

4. Paravent selon la revendication 2, caractérisé en ce que le côté des crémaillères (31) opposé à la denture est fixé sur la surface intérieure des portes coulissantes (19), et en ce que les pignons (39) sont disposés sur un arbre commun (37) qui est monté en rotation dans des paliers (41) fixés à la paroi arrière (13).

5. Paravent selon l'une des revendications 3 ou 4, caractérisé en ce que les crémaillères (31) sont fixées aux profilés formant châssis (29) qui bordent la porte coulissante (19) en haut et en bas, ou en ce que les profilés formant châssis (29) comportent eux-mêmes une surface dentée.

6. Paravent selon l'une des revendications 2 à 5, caractérisé en ce que les pignons (39) sont guidés de façon à être appliqués sans jeu par une tension élastique contre les crémaillères (31).

7. Paravent selon la revendication 6, caractérisé en ce que la tension élastique peut être maintenue par une précontrainte obtenue par flexion de l'arbre (37) en direction de la porte coulissante (19).

8. Paravent selon la revendication 2, caractérisé en ce que les crémaillères (131) sont fixées aux bords supérieur et inférieur de la porte (119), de façon que les dentures des deux crémaillères (131) soient tournées l'une vers l'autre, et en ce que les pignons (139) sont montés en rotation selon des axes (147) perpendiculaires au plan de déplacement de la porte coulissante (119) et sont reliés entre eux en liaison dynamique au moyen d'un dispositif de transmission à câble ou à courroie (149, 151).

9. Paravent selon la revendication 1, caractérisé en ce que, dans la zone d'une entretoise (217) de la porte coulissante (219), sont fixées les extrémités de deux éléments de traction flexibles (251, 252) qui sont guidés, de manière croisée, par l'intermédiaire d'un premier galet (249) disposé sur le bord supérieur de la porte coulissante (219), jusqu'à un second galet (249) disposé sur le bord inférieur de la porte coulissante et, de là, au socle (211) et qui y sont fixés.

10. Paravent selon l'une des revendications 1 à 9, caractérisé en ce que les moyens de transmission (37, 137, 51, 151, 251, 252) sont reliés à un dispositif d'entraînement électrique (53).

11. Paravent selon l'une des revendications 1 à 10, caractérisé en ce que des joints d'étanchéité élastiques (55) en matériau électroconducteur sont disposés entre la paroi arrière (13, 113, 213) et les portes coulissantes (19, 119, 219), et/ou en ce que les crémaillères (31, 131) et les pignons (39, 139) sont fabriqués en matériau électroconducteur.
